# EUROPEAN PATENT SPECIFICATION

(11) **EP 4 466 456 B1**
(45) Date of publication and mention of the grant of the patent: **18.11.2026**
(21) Application number: 23700750.5
(22) Date of filing: 11.01.2023
(51) Int. Cl.: F03D 13/20, C08G 18/48, C08G 18/80, C08G 18/08, C08G 18/16, C08G 18/32, C08G 18/76

(54) **GASKET FOR A TRANSITION PIECE OF A WIND TURBINE AND METHOD FOR MOUNTING SUCH A GASKET**
DICHTUNG FÜR EIN ÜBERGANGSSTÜCK EINER WINDTURBINE UND MONTAGEVERFAHREN FÜR SOLCH EINE DICHTUNG
JOINT D'ÉTANCHÉITÉ POUR UNE PIÈCE DE TRANSITION D'UNE ÉOLIENNE ET PROCÉDURE DE MONTAGE D'UN TEL JOINT

(30) Priority: 18.01.2022 EP 22152102
(43) Date of publication of application: 27.11.2024
(73) Proprietor: BASF SE, 67056 Ludwigshafen am Rhein (DE)
(72) Inventor: FRITZ, Ralf, 49448 Lemfoerde (DE); EVERS, Christoph, 49448 Lemfoerde (DE); KLEEMANN, Ann-kristin, 49448 Lemfoerde (DE); LUKAT, Gunther, 49448 Lemfoerde (DE); SPECKELS, Wiebke, 49448 Lemfoerde (DE)
(74) Representative: BASF IP Association
(86) International application number: PCT/EP2023/050554
(87) International publication number: WO 2023/138967

(56) References cited:
- EP-A1- 2 461 022
- EP-B1- 3 443 224
- US-A1- 2014 170 352
- US-A1- 2016 032 554

## Description

A gasket for formfitting the bottom part of an upper structure of a wind turbine, such as a transition piece or a turbine tower, with one or more foundation piles, the gasket shaped as a hollow elongated body for surrounding at least a part of a pile structure, when mounted between the upper structure and the pile structure, such that the gasket stabilizes the position of the upper structure relative to the pile structure by absorbing compression, tension, and/or shear stresses occurring due to movements of the upper structure and/or the pile structure characterized in that the gasket comprises a polyurethane obtainable by mixing (a) organic polyisocyanate, (b) polymeric compounds having at least two isocyanate-reactive hydrogen atoms, comprising at least one polyetherol (b1) obtained by alkoxylation of a difunctional starter molecule and at least one polyetherol (b2) obtained by alkoxylation of a trifunctional starter molecule, (c) 1 to 12 wt.-%, based on the total weight of components a) to c), of one or more chain extenders, (d) catalyst and (e) optionally fillers and/or polyurethane additives, to give a reaction mixture and allow the reaction mixture to cure.. Further, the present invention is directed to a Method for mounting a transition piece of a wind turbine to a monopile, comprising the steps of mounting the gasket according in the bottom part of the transition piece and assembling the transition piece on to the monopile, such that the gasket is sandwiched between the transition piece and the monopile.

Large scale structures, such as wind turbines and especially offshore wind turbines, are mounted into the ground by e.g. a monopile that is driven into the sea bed. Equivalently to a monopile, the large scale structures may be mounted on a jacket foundation, such as a tripod or tetrapod foundation and potentially floating platforms. Jacket foundations may provide a stronger and more flexible foundation, since the weight of the structure is supported by multiple piles, or legs, rather than a single monopile. The upper structure is typically mounted on an assembly of an upper structure of a wind turbine as the turbine tower or a transition piece with one or more foundation piles, such as a monopile. In many cases a monopile is used. One end of the pile is fixed into the ground or seabed, and at the other (upper) end of the pile, the transition piece or the tower structure is mounted. Thus, the assembly provides a level platform for mounting the turbine itself. The assembly of upper structure, e.g. the transition piece and the pile, e.g.the monopile, carries the load of the wind turbine. It is therefore essential that the assembly is stable, and that the transition piece does not move relative to the monopile. Especially at sea level, the connection is additionally influenced by sea water, wheatear conditions such as wind, sun and oxygen.

Conventionally the upper structure, in many cases the transition piece, is fixed or stabilized relative to the monopile by grouting or by bolting the two together - or a combination hereof. The monopile and the transition piece are cylindrical bodies that are concentrically arranged with a space in between, and the two bodies are then mounted and fixed together by a grout seal formed in the annular space between the monopile and transition piece, and/or by bolting the transition piece and the monopile together, for example by bolting corresponding flanges of the two elements. This setup is time consuming and expensive, as conditions for installation are requiring low wave movements and almost no wind. Especially grouting and bolting cannot be scaled up to future size of wind turbines. In addition, it has been found that an assembly by grouting is not durable over the lifetime of the turbine.

WO 2017178657 suggests formfitting the pile structure and the upper part of the turbine by placing a gasket between the pile structure and the upper structure, the gasket shaped as a hollow elongated body for surrounding at least a part of a pile structure, when mounted between the upper structure and the pile structure, such that the gasket stabilizes the position of the upper structure relative to the pile structure by absorbing compression, tension, and/or shear stresses occurring due to movements of the upper structure and/or the pile structure. As material for the gasket, WO2017178657 suggests an elastomeric or even viscoelastic material. Polymeric materials as polyurea, polyurethane, rubber, nylon, polyoxymethylene, polyethylene, and combinations thereof are mentioned as preferred materials for the gasket, such that the use of mortar, grout, sand, gravel, cement, and/or concrete can be avoided. Failure of the gasket due to high compression forces is therefore critical and must be avoided. According to WO 2017178657 the gasket disclosed further acts as seal against sea water tolerates compression forces of preferably 15 N/mm², has a hardness of 70 to 120 shore A. WO 2017178657 is silent about the material fulfilling these needs. Further examples of gaskets according to the state of the art could be found in EP3443224A1, EP2461022A1, US2016/032554A1 and US2014/170352A1.

Therefore, is object of the present invention to provide gasket for formfitting the bottom part of an upper structure of a wind turbine, such as a transition piece or a turbine tower, with one or more foundation piles which has a high elasticity. In particular, the elastomer must be suitable for compensating for unevenness on the pile and the upper structure, for example the transition piece. Due to production, it is not possible to achieve a sufficiently flat surface on the two large steel parts, however, in order to be able to realize a form fit, air pockets between the elastomer and the steel parts must be avoided as far as possible. Thus, the elongation/elasticity of the material is important and must be maintained even under aging in seawater. As a further requirement, it is necessary that the compression set of the material forming the gasket is low and does not change under aging conditions in sea water.

The object according to the invention is solved by a gasket for formfitting the bottom part of an upper structure of a wind turbine, such as a transition piece or a turbine tower, with one or more foundation piles, the gasket shaped as a hollow elongated body for surrounding at least a part of a pile structure, when mounted between the upper structure and the pile structure, such that the gasket stabilizes the position of the upper structure relative to the pile structure by absorbing compression, tension, and/or shear stresses occurring due to movements of the upper structure and/or the pile structure characterized in that the gasket comprises a polyurethane obtainable by mixing (a) organic polyisocyanate, (b) polymeric compounds having at least two isocyanate-reactive hydrogen atoms, comprising at least one polyetherol (b1) obtained by alkoxylation of a difunctional starter molecule and at least one polyetherol (b2) obtained by alkoxylation of a trifunctional starter molecule, (c) 1 to 12 wt.-%, based on the total weight of components a) to c), of one or more chain extenders, (d) catalyst and (e) optionally fillers and/or polyurethane additives, to give a reaction mixture and allow the reaction mixture to cure.

The present invention relates to a gasket for mounting onshore and preferably offshore wind turbine structures, such as a gasket adapted for being placed between a transition piece and a pile structure, such as a monopile of a wind turbine, or a pile for a tripod or a tetrapod of a wind turbine. The gasket is further suitable for mounting other offshore wind turbine related structures with corresponding structural geometries, such as multiple tower sections. The sections may comprise similar tubular or conical assembly shape as the transition piece to pile structure. The gasket may therefore be suitable for mounting multiple elements of a transition piece, or for mounting multiple tower sections.

In a preferred embodiment of the invention, the gasket comprises at least 80% by weight, more preferably at least 90 % by weight and especially preferred is consisting of a polyurethane according to the invention.

The organic and/or modified polyisocyanates (a) used for production of the inventive polyurethane can be selected from organic and/or modified polyisocyanates known in the art of polyurethane chemistry and comprise the aliphatic, cycloaliphatic and aromatic di- or polyfunctional isocyanates known from the prior art (constituent a-1) and any desired mixtures thereof. Examples are diphenylmethane 4,4'-diisocyanate, diphenylmethane 2,4'-diisocyanate, the mixtures of monomeric diphenylmethane diisocyanates and higher polycyclic homologs of diphenylmethane diisocyanate, tetramethylene diisocyanate, hexamethylene diisocyanate (HDI), the mixture of hexamethylene diisocyanates and higher polycyclic homologs of hexamethylene diisocyanate (polycyclic HDI), isophorone diisocyanate (IPDI), tolylene 2,4- or 2,6-diisocyanate (TDI) or mixtures of the isocyanates mentioned. Preference is given to using tolylene diisocyanate (TDI), diphenylmethane diisocyanate (MDI), as 2,4'-MDI and 4,4'-MDI and mixtures of diphenylmethane diisocyanate and polyphenylene polymethylene polyisocyanates (crude MDI). The isocyanates may be modified, for example by incorporation of uretdione, carbamate, isocyanurate, carbodiimide, allophanate and especially urethane groups. In a preferred embodiment the organic and/or modified polyisocyanates (a) comprises MDI or modified MDI.

In a preferred embodiment of the invention the isocyanate component (a) is used in the form of isocyanate-groups containing polyisocyanate prepolymers. These polyisocyanate prepolymers are obtainable by reacting above-described polyisocyanates (a-1), for example at temperatures of 30 to 100°C, preferably at about 80°C, with polyols (a-2) to give the prepolymer. Preference is given to preparing the inventive prepolymers using 4,4'-MDI together with uretonimine-modified MDI and commercial polyols based on polyethers, for example comprising ethylene glycol, propylene glycol and/or butanediol or oligomers comprising ethylene glycol, propylene glycol and/or butanediol as building blocks. Especially preferred polyethers (a2) are propylenglycol, dipropylenglycol, tripropylenglycol, and oligomeric propylene glycols having 4 to 20, preferably 4 to 15 and more preferred 4 to 10 propylene glycol building blocks, and mixtures thereof.

In a preferred embodiment the isocyanate (a) is an MDI prepolymer having an NCO content of 6to 30 % by weight, preferably 10 to 29% by weight and especially preferred 20 to 2 % by weight, based on the weight of the prepolymer and is obtainable by reacting 4,4'-MDI with oligomeric propylene glycol to give the prepolymer.

Polymeric compounds having at least two isocyanate-reactive hydrogen atoms (b) have a molecular weight of at least 400 g/mol. It is possible to use all compounds which are known for polyurethane preparation and have at least two reactive hydrogen atoms and a molecular weight of at least 400 g/mol. These have, for example, a functionality of 2 to 8 and a molecular weight of 400 to 12000 g/mol. For example, it is possible to use polyether polyamines and/or polyols selected from the group of the polyether polyols, polyester polyols or mixtures thereof.

The polyols used with preference are polyetherpolyols, polycarbonate polyols and/or polyesterols having molecular weights between 500 and 12 000, preferably 500 to 6000, especially 500 to less than 4000, and preferably a mean functionality of 2 to 6, preferably 2 to 4 especially 2 to 3. The polyols used are preferably exclusively polyetherpolyols and polycarbonate polyols, more preferred exclusively polyetherpolyols. The average hydroxyl number of the polymeric compounds having at least two isocyanate-reactive hydrogen atoms (b) is in a preferred embodiment between 20 and 80, more preferred between 20 and 50 mg KOH/g. In the context of the present invention, the functionality of a polyether polyol is to be understood as the functionality of the starter molecule or the average functionality of the mixture of starter molecules, even if in reality the functionality is lowered by side reactions compared to the functionality of the starter molecules.

The polyetherols usable in accordance with the invention are prepared by known processes. For example, they can be prepared by anionic polymerization with alkali metal hydroxides, for example sodium or potassium hydroxide, or alkali metal alkoxides, for example sodium methoxide, sodium or potassium ethoxide or potassium isopropoxide as catalysts, and with addition of at least one starter molecule having 2 to 8, preferably 2 to 6, reactive hydrogen atoms, or by cationic polymerization with Lewis acids such as antimony pentachloride, boron fluoride etherate inter alia, or bleaching earth as catalysts. It is likewise possible to prepare polyether polyols by double metal cyanide catalysis from one or more alkylene oxides having 2 to 4 carbon atoms in the alkylene radical. It is also possible to use tertiary amines as the catalyst, for example triethylamine, tributylamine, trimethylamine, dimethylethanolamine, imidazole or dimethylcyclohexylamine. For specific end uses, it is also possible to incorporate monofunctional starters into the polyether structure.

Suitable alkylene oxides are, for example, tetrahydrofuran, 1,3-propylene oxide, 1,2- or 2,3-butylene oxide, styrene oxide, and preferably ethylene oxide and 1,2-propylene oxide. The alkylene oxides can be used individually, in alternating succession or as mixtures.

Examples of useful starter molecules include: water, aliphatic and aromatic, optionally N-mono-, N,N- and N,N'-dialkyl-substituted diamines having 1 to 4 carbon atoms in the alkyl radical, such as optionally mono- and dialkyl-substituted ethylenediamine, diethylenetriamine, triethylenetetramine, 1,3-propylenediamine, 1,3- or 1,4-butylenediamine, 1,2-, 1,3-, 1,4-, 1,5- and 1,6-hexamethylenediamine, phenylenediamine, 2,3-, 2,4- and 2,6-tolylenediamine (TDA) and 4,4'-, 2,4'- and 2,2'-diaminodiphenylmethane (MDA) and polymeric MDA. Useful starter molecules also include: alkanolamines, for example ethanolamine, N-methyl- and N-ethylethanolamine, dialkanolamines, for example diethanolamine, N-methyl- and N-ethyldiethanolamine, trialkanolamines, for example triethanolamine, and ammonia. Preference is given to using polyhydric alcohols such as ethanediol, 1,2- and 2,3-propanediol, diethylene glycol, dipropylene glycol, 1,4-butanediol, 1,6-hexanediol, glycerol, trimethylolpropane; pentaerythritol, and mixtures thereof. The polyether polyols can be used individually or in the form of mixtures.

The polymeric compounds having at least two isocyanate-reactive hydrogen atoms (b) comprise polyether polyols (b1), obtained from alcoxylation of a difunctional starter molecule and polyether polyols (b2) obtained from alcoxylation of a trifunctional starter molecule. In a preferred embodiment of the present invention the polymeric compounds having at least two isocyanate-reactive hydrogen atoms (b) comprise at least 80 % by weight, more preferably at least 90 % by weight, even more preferred at least 95 % by weight, each based on the total weight of compounds (b) and especially preferred is consisting of the polyols (b1) and (b2).

The difunctional starter molecules used for preparation of constituent (b1) may, for example, be ethanediol, propanediol-1,2- and -1,3, diethylene glycol, dipropylene glycol, butanediol-1,4 or hexanediol-1,6 or mixtures thereof. Preference is given to using diethylene glycol or dipropylene glycol, especially preferred dipropylene glycol.

The trifunctional starter molecules used for preparation of constituent (b2) are preferably glycerol, trimethylolpropane or mixtures thereof.

In a preferred embodiment of the present invention the alkoxylation of the difunctional starter molecules and of the trifunctional starter molecules is performed with ethylene oxide and propylene oxide as alkoxylation agent each. The polyols (b1) and (b2) comprises ethylene oxide and propylene oxide as building blocks. In a preferred embodiment of the invention the weight ratio of ethylene oxide and propylene oxide in polyetherol (b1) as well as in the polyetherol (b2) is in the range of 50 :50 to 5 : 95, more preferred 70 : 30 to 90 : 10 and especially preferred 75 : 25 to 85 : 15. Preferably the alkoxylation is conducted in a way that the polyol (b1) and the polyol (b2) each have an ethylene oxide end-block of at least 5 % by weight, based on the total amount of the alkylene oxide in the polyol (b1) or (b2) respectively.

In general, the alkoxylation of constituent (b1) is executed in such a way that constituent (b1) has a hydroxyl number of 20 to 40 mg KOH/g, preferably 22 to 35 mg KOH/g and more preferred 24 to 32 mg KOH/g.

In general, the alkoxylation of constituent (b2) is executed in such a way that constituent (b2) has a hydroxyl number of 20 to 40 mg KOH/g, preferably 22 to 35 mg KOH/g and more preferred 24 to 32 mg KOH/g.

In a preferred embodiment of the present invention the content of polyol (b1) is 35 to 60 % by weight and the content of polyol (b2) is 35 to 60 % by weight, each based on the total weight of polymeric compounds having at least two isocyanate-reactive hydrogen atoms (b). Preferably, the polymeric compounds having at least two isocyanate-reactive hydrogen atoms (b) contains less than 10 % by weight polymeric compounds having at least two isocyanate-reactive hydrogen atoms different to polyol (b1) and polyol (b2) and more preferred is consisting of polyol (b1) and polyol (b2).

The chain extenders c) used may be substances having a molecular weight of less than 400 g/mol, more preferably of 60 to 350 g/mol and having 2 isocyanate-reactive hydrogen atoms. These can be used individually or preferably in the form of mixtures. Preference is given to using diols. Examples of useful substances include aliphatic, cycloaliphatic and/or araliphatic or aromatic diols having 2 to 14, preferably 2 to 10, carbon atoms, such as ethylene glycol, 1,3-propanediol, 1,4-butanediol, 1,6-hexanediol, 1,10-decanediol and bis(2-hydroxyethyl)hydroquinone, 1,2-, 1,3-, 1,4-dihydroxycyclohexane, diethylene glycol, dipropylene glycol, tripropylene glycol and low molecular weight hydroxyl-containing polyalkylene oxides based on ethylene oxide and/or 1,2-propylene oxide and the aforementioned diols as starter molecules.

Preferably the chain extender (c) is selected from the group, consisting of propylene glycol, dipropylene glycol, tripropylene glycol, butane diol and mixtures of two or more thereof, especially preferred the chain extender (c) is 1,4-butandiol.

According to the invention, chain extender (c) is used in an amount of 1 to 12 wt.-%, preferably 4 to 11 wt.-% and especially preferred 7 to 10 wt.-%, based on the total weight of components a) to c).

The catalysts (d) used for production of the polyurethane moldings are preferably compounds which significantly accelerate the reaction of the compounds comprising hydroxyl groups of component (b) and optionally (c) with the organic, optionally modified polyisocyanates (a). Examples include amidines such as 2,3-dimethyl-3,4,5,6-tetrahydropyrimidine, tertiary amines such as triethylamine, tributylamine, dimethylbenzylamine, N-methyl-, N-ethyl-, N-cyclohexylmorpholine, N, N, N', N'-tetramethylethylenediamine, N, N, N', N'-tetramethylbutanediamine, N,N,N',N'-tetramethylhexanediamine, pentamethyldiethylenetri-amine, tetramethyldiaminoethyl ether, bis(dimethylaminopropyl)urea, dimethylpiperazine, 1,2-dimethylimidazole, 1-azabicyclo[3.3.0]octane and preferably 1,4-diazabicyclo[2.2.2]octane, and alkanolamine compounds such as triethanolamine, triisopropanolamine, N-methyl- and N-ethyldiethanolamine and dimethylethanolamine. Likewise useful are organic metal compounds, preferably organic tin compounds, such as tin(II) salts of organic carboxylic acids, e.g. tin(II) acetate, tin(II) octoate, tin(II) ethylhexoate and tin(II) laurate, and the dialkyltin(IV) salts of organic carboxylic acids, for example dibutyltin diacetate, dibutyltin dilaurate, dibutyltin maleate and dioctyltin diacetate, and also bismuth carboxylates such as bismuth(III) neodecanoate, bismuth 2-ethylhexanoate and bismuth octanoate or mixtures thereof. The organic metal compounds can be used alone or preferably in combination with strongly basic amines. If component (b) comprises an ester, preference is given to using exclusively amine catalysts.

Preference is given to using 0.001 to 5% by weight, especially 0.05 to 2% by weight, of catalyst or catalyst combination, based on the weight of component (b).

Optionally, fillers and/or polyurethane additives (e) may be added to the mixture of components a) to d). Examples here include surface-active substances, dyes, pigments, flame retardants, hydrolysis stabilizers, oxidation stabilizers and UV stabilizers.

In addition, it is possible to add blowing agents known from the prior art as additives (f). However, it is preferable that no blowing agent is used, and more particularly that no water is added.

Thus, components a) and b) more preferably do not comprise any blowing agent apart from residual water present in industrially produced polyols.

In addition, it is especially preferable when the residual water content is reduced by addition of water scavengers. Suitable water scavengers are, for example, zeolites. These water scavengers are used, for example, in an amount of 0.1 to 10% by weight, based on the total weight of the polyol component b).

If, as described above, no blowing agents are used, compact polyurethanes and not polyurethane foams are obtained as the inventive product. In a preferred embodiment the gasket according to the present invention comprises less than 5 % by volume, preferably less than 3 % by volume and especially preferred less than 1 % by volume of entrapped air bubbles.

The starting components are typically mixed and reacted at a temperature of 0°C to 100°C, preferably 15°C to 60°C. The mixing can be effected with the customary PUR processing machines. In a preferred embodiment, the mixing is effected by low-pressure machines or highpressure machines. Preferably the mixing is performed at an isocyanate index of 85 to 130, more preferred 90 to 120, even more preferred at 95 to 110 and especially preferred at 98 to 102 and most preferred 99 to 101. The isocyanate index is defined as ratio of NCO groups of the isocyanate to the sum total of the reactive hydrogen atoms, an Isocyanate index of 100 relates to a ratio of NCO groups of the isocyanate to the sum total of the reactive hydrogen atoms of 1 : 1.

The gasket according to the present invention has a shore A hardness of preferably 75 to 100 shore A, more preferred 80 to 95 and especially preferred 82 to 92 shore A. For a person skilled in the art it is well known to adjust the hardness for example by varying the amount of filler or chain extender.

The gasket according to the invention has outstanding properties. The elongation at break according to DIN 53504 is higher than 400%, preferably higher than 450% and especially higher than 500 % while the compression set values according to (DIN ISO 815) (72 h, 23 °C, 30 min) after storage in artificial sea water at 50 °C for 90 days is less than 50%, preferably less than 40 % and especially preferred less than 30%. In addition, the gasket shows a high tear strength and low abrasion. The mechanical properties of the gasket according to the invention remain high, even after storage in artificial sea water at 50 °C for 90 days, compared to the properties before storage in artificial sea water. So, the shore A hardness preferably changes by less than 5 %, more preferred by less than 4 % and especially preferred by less than 3 %, based on the initial hardness, and also tear strength and tear resistance preferably do not change by more than 10 %, more preferred by not more than 5%, each based on the initial values. Further, the swelling after storage in artificial sea water at 50 °C for 90 days is preferably less than 3%, more preferred less than 2.5 %

The gasket according to the present invention preferably has a wall thickness of at least 10 mm, more preferably at least 15 mm, even more preferably at least 20 mm, yet more preferably at least 25 mm, or between 10-80 mm, more preferably between 20-60 mm, and most preferably between 25-50 mm and the hollow elongated body has a height of at least 2 m, or at least 3 m, or at least 5 m, or at least 7 m, or at least 8 m, or between 5-60 m, more preferably between 10-50m, and most preferably between 15-40m.

The presently disclosed gasket may be used for mounting any onshore or offshore wind turbine related structure. This includes that it is suitable for mounting a transition piece to a pile structure, e.g. mounting a transition piece to a monopile, or mounting the transition piece to any other type of foundation structure for contact with the sea bed, such as a pile for a tripod or a tetrapod. Each of the respectively three or four piles, or legs, of a tripod or a tetrapod, may be considered equivalent to a monopile.

The present invention is further directed to a method for mounting a transition piece of a wind turbine to a monopile, comprising the steps of mounting the gasket according to the invention in the bottom part of the transition piece and assembling the transition piece on to the monopile, such that the gasket is sandwiched between the transition piece and the monopile. Preferably the upper structure of a wind turbine is mounted to a monopile at the location where the monopile has been fixed in ground, such as at an offshore location.

The gasket can be mounted in the bottom part of the upper structure by spraying or casting the reaction mixture to the part of the upper structure where the gasket should be positioned. Alternative the gasket can be molded completely or in parts and can than be positioned and mounted. Fixation of the gasket is preferably performed by adhering the gasket, preferably adhering the gasket by application of an adhesive or adhesive tapes. In case that an adhesive is used, possibly a polyurethane, epoxy or acrylate adhesive or adhesive tape is used.

The invention is to be illustrated by examples which follow.

### Starting materials:

Polyol 1: Polyetherpolyol obtained by alkoxylation of propylene glycol with propyleneoxide and ethyleneoxide wherein the 80 % by weight of propyleneoxide and 20 % by weight of ethyleneoxide is used having a hydroxyl number of 30 mg KOH/g.

Polyol 2: Polyetherpolyol obtained by alkoxylation of glycerol with propyleneoxide and ethyleneoxide wherein the 80 % by weight of propyleneoxide and 20 % by weight of ethyleneoxide is used having a hydroxyl number of 26 mg KOH/g.

Isocyanate: An Isocyanate prepolymer of 4,4'-MDI and dipropylene glycol and oligomers of propylene glycol having an NCO content of 23 % by weight.

Catalyst mixture: Mixture containing an amine catalyst, an acid blocked amine catalyst and a metal catalyst

### Water scavenger: Zeolite

A polyol component comprising 46 % by weight polyol 1, 44 % by weight polyol 2, 8 % by weight butanediol and 0,17% by weight catalyst mixture, 2%) water scavenger were mixed with the isocyanate at an isocyanate index of 100. Component temperature was 40°C, mould temperature was 90°C. The reaction mixture was introduced into a mold (800 x 400 x 30 mm; 10-12 kg/part) and the reaction mixture was cured.

The obtained molded polyurethane was stored in artificial sea water [ASTM D1141-98 (2013)] at 50 °C for 49 and 91 days. The following properties were measured before, after 49 and after 91 days: swelling (volume and weight) according to ASTM D570, Shore hardness according to DIN ISO 7619-1Tensile strength and Elongation at break referring to DIN 53504, according to DIN EN ISO 527, Tear resistance according to DIN ISO 34,1, B(b), and Compression set (72 h at 23 °C) according to DIN ISO 815-1. After storage in artificial sea water the specimens were rubbed down and directly measured. Before the abrasion measurements the samples were dried for 16 hours at 50 °C.

Table 1 shows the results of the measurements:

**Table 1**

| Storage in artificial sea water | Weight difference | Volume difference | Hardness | Elongation at break | Tensile strength | Tear resistance | Compression set | Abrasion |
|---|---|---|---|---|---|---|---|---|
| Days - | [%] | [%] | Shore A | [%] | [MPa] | [kN/m] | [%] | [mm³] |
| Initial | - | - | 89 | 480 ± 20 | 21 ± 2 | 37 ± 2 | 38 ± 0 | 122 ± 1 |
| 49 | 1,8 | 1,7 | 87 | 550 ± 50 | 19 ± 2 | 36 ± 1 | 21 ± 0 | 131 ± 8 |
| 91 | 2,0 | 1,9 | 87 | 590 ± 10 | 20 ± 2 | 38 ± 0 | 14 ± 0 | 131 ± 2 |

As shown in table 1 the polyurethane according to the present invention shows good mechanical properties also after aging in artificial sea water and is perfectly suited for the production of a gasket for formfitting the bottom part of an upper structure of a wind turbine with one or more foundation piles.

## Claims

1. A gasket for formfitting the bottom part of an upper structure of a wind turbine, such as a transition piece or a turbine tower, with one or more foundation piles, the gasket shaped as a hollow elongated body for surrounding at least a part of a pile structure, when mounted between the upper structure and the pile structure, such that the gasket stabilizes the position of the upper structure relative to the pile structure by absorbing compression, tension, and/or shear stresses occurring due to movements of the upper structure and/or the pile structure **characterized in that** the gasket comprises a polyurethane obtainable by mixing
a) organic polyisocyanate,
b) polymeric compounds having at least two isocyanate-reactive hydrogen atoms comprising at least one polyetherol (b1) obtained by alkoxylation of a difunctional starter molecule and at least one polyetherol (b2) obtained by alkoxylation of a trifunctional starter molecule
c) 1 to 12 wt.-%, based on the total weight of components a) to c), of one or more chain extenders,
d) catalyst and
e) optionally fillers and/or polyurethane additives
to give a reaction mixture and allow the reaction mixture to cure.

2. Gasket according to claim 1, **characterized in that** the polyetherol (b1) and the polyetherpolyol (b2) each comprise ethylene oxide and propylene oxide as building blocks.

3. Gasket according to claim 1 or 2, **characterized in that** the weight ratio of ethylene oxide and propylene oxide in polyetherol (b1) and polyetherol (b2) each is 50 :50 to 5 : 95.

4. Gasket according to any of claims 1 to 3, **characterized in that** the hydroxyl value of polyetherpolyol (b1) and polyetherpolyol (b2) is 20 to 40 mg KOH/g each.

5. Gasket according to any of claims 1 to 4, **characterized in that** the content of polyol (b1) is 35 to 60 % by weight and of polyol (b2) is 35 to 60 % by weight, each based on the total weight of polymeric compounds having at least two isocyanate-reactive hydrogen atoms (b).

6. Gasket according to any of claims 1 to 5, **characterized in that** the chain extender (c) is selected from the group, consisting of propylene glycol, dipropylene glycol, tripropylene glycol, butane diol and mixtures of two or more thereof.

7. Gasket according to any of claims 1 to 6, **characterized in that** the isocyanate (a) comprises MDI or modified MDI.

8. Gasket according to claim 7, **characterized in that** the isocyanate (a) is a MDI prepolymer having an NCO content of 6 to 30 % by weight, based on the weight of the prepolymer

9. Gasket according to claim 8, **characterized in that** the MDI prepolymer is obtainable by reacting MDI (a-1), with oligomeric propylene glycol to give the prepolymer.

10. Gasket according to any of claims 1 to 9, **characterized in that** the compounds (a) to (e) are reacted at an isocyanate index of 85 to 130.

11. Gasket according to any of claims 1 to 10, **characterized in that** the gasket comprises less than 5 % by volume of entrapped gas bubbles.

12. Gasket according to any of claims 1 to 11, **characterized in that** the gasket has a hardness of 80 to 95 shore A.

13. Gasket according to any of claims 1 to 12, **characterized in that** the pile structure is a pile for a monopile, a tripod, or a tetrapod.

14. Method for mounting a transition piece of a wind turbine to a monopile, comprising the steps of:
mounting the gasket according to any of claims 1-13 in the bottom part of the transition piece and
assembling the transition piece on to the monopile, such that the gasket is sandwiched between the transition piece and the monopile.

15. Method according to claim 14, **characterized in that** transition piece of a wind turbine is mounted to a monopile at the location where the monopile has been fixed in ground, such as at an offshore location.

## Patentansprüche

1. Eine Dichtung zum formschlüssigen Verbinden des unteren Teils einer Oberkonstruktion einer Windturbine, wie eines Übergangsstücks oder eines Turbinenturms, mit einem oder mehreren Gründungspfählen, wobei die Dichtung geformt ist
als ein hohler länglicher Körper zum Umschließen zumindest eines Teils einer Pfahlstruktur, wenn sie zwischen der Oberkonstruktion und der Pfahlstruktur montiert ist, sodass die Dichtung die Position der Oberkonstruktion relativ zur Pfahlstruktur stabilisiert, indem sie Druck-, Zug- und/oder Scherspannungen aufnimmt, die aufgrund von Bewegungen der Oberkonstruktion und/oder der Pfahlstruktur auftreten, **dadurch gekennzeichnet, dass** die Dichtung ein Polyurethan umfasst,
erhältlich durch Mischen von
a) organischem Polyisocyanat,
b) polymeren Verbindungen mit mindestens zwei isocyanatreaktiven Wasserstoffatomen, umfassend mindestens ein Polyetherol (b1), erhalten durch Alkoxylierung eines difunktionellen Startermoleküls, und mindestens ein Polyetherol (b2), erhalten durch Alkoxylierung eines tri-
funktionellen Startermoleküls,
c) 1 bis 12 Gew.-%, bezogen auf das Gesamtgewicht der Komponenten a) bis c), eines oder mehrerer Kettenverlängerer,
d) Katalysator und
e) gegebenenfalls Füllstoffe und/oder Polyurethanadditive,
um ein Reaktionsgemisch zu erhalten und das Reaktionsgemisch aushärten zu lassen.

2. Dichtung nach Anspruch 1, **dadurch gekennzeichnet, dass** das Polyetherol (b1) und das Polyetherpolyol (b2) jeweils Ethylenoxid und Propylenoxid als Bausteine umfassen.

3. Dichtung nach Anspruch 1 oder 2, **dadurch gekennzeichnet, dass** das Gewichtsverhältnis von Ethylenoxid und Propylenoxid im Polyetherol (b1) und Polyetherol (b2) jeweils 50 : 50 bis 5 : 95 beträgt.

4. Dichtung nach einem der Ansprüche 1 bis 3, **dadurch gekennzeichnet, dass** der Hydroxylwert des Polyetherpolyols (b1) und des Polyetherpolyols (b2) jeweils 20 bis 40 mg KOH/g beträgt.

5. Dichtung nach einem der Ansprüche 1 bis 4, **dadurch gekennzeichnet, dass** der Gehalt an Polyol (b1) 35 bis 60 Gew.-% und an Polyol (b2) 35 bis 60 Gew.-% beträgt, jeweils bezogen auf das Gesamtgewicht der polymeren Verbindungen mit mindestens zwei isocyanatreaktiven Wasserstoffatomen (b).

6. Dichtung nach einem der Ansprüche 1 bis 5, **dadurch gekennzeichnet, dass** der Kettenverlängerer (c) ausgewählt ist aus der Gruppe, bestehend aus Propylenglykol, Dipropylenglykol, Tripropylenglykol, Butandiol und Mischungen aus zwei oder mehr davon.

7. Dichtung nach einem der Ansprüche 1 bis 6, **dadurch gekennzeichnet, dass** das Isocyanat (a) umfasst MDI oder modifiziertes MDI.

8. Dichtung nach Anspruch 7, **dadurch gekennzeichnet, dass** das Isocyanat (a) ein MDI-Prepolymer mit einem NCO-Gehalt von 6 bis 30 Gew.-%, bezogen auf das Gewicht des Prepolymers, ist.

9. Dichtung nach Anspruch 8, **dadurch gekennzeichnet, dass** das MDI-Prepolymer erhältlich ist durch Umsetzung von MDI (a-1) mit oligomerem Propylenglykol zum Prepolymer.

10. Dichtung nach einem der Ansprüche 1 bis 9, **dadurch gekennzeichnet, dass** die Verbindungen (a) bis (e) bei einem Isocyanatindex von 85 bis 130 umgesetzt werden.

11. Dichtung nach einem der Ansprüche 1 bis 10, **dadurch gekennzeichnet, dass** die Dichtung weniger als 5 Vol.-% eingeschlossene Gasblasen enthält.

12. Dichtung nach einem der Ansprüche 1 bis 11, **dadurch gekennzeichnet, dass** die Dichtung eine Härte von 80 bis 95 Shore A aufweist.

13. Dichtung nach einem der Ansprüche 1 bis 12, **dadurch gekennzeichnet, dass** die Pfahlstruktur ein Pfahl ist für einen Monopfahl, ein Tripod oder ein Tetrapod.

14. Verfahren zur Montage eines Übergangsstücks einer Windturbine an einem Monopfahl, umfassend die Schritte:
Montieren der Dichtung nach einem der Ansprüche 1 bis 13 im unteren Teil des Übergangsstücks und
Zusammensetzen des Übergangsstücks auf dem Monopfahl, sodass die Dichtung zwischen dem Übergangsstück und dem Monopfahl eingeklemmt ist.

15. Verfahren nach Anspruch 14, **dadurch gekennzeichnet, dass** das Übergangsstück einer Windturbine an einem Monopfahl an dem Ort montiert wird, an dem der Monopfahl im Boden verankert wurde, beispielsweise an einem Offshore-Standort.

## Revendications

1. Un joint d'étanchéité pour l'ajustement par forme de la partie inférieure d'une structure supérieure d'une éolienne, telle qu'une pièce de transition ou une tour de turbine, avec un ou plusieurs pieux de fondation, le joint d'étanchéité étant façonné en tant que corps allongé creux destiné à entourer au moins une partie d'une structure de pieu, lorsqu'il est monté entre la structure supérieure et la structure de pieu, de sorte que le joint d'étanchéité stabilise la position de la structure supérieure par rapport à la structure de pieu en absorbant les contraintes de compression, de traction et/ou de cisaillement survenant en raison des mouvements de la structure supérieure et/ou de la structure de pieu, **caractérisé en ce que** le joint d'étanchéité comprend un polyuréthane pouvant être obtenu par mélange
a) de polyisocyanate organique,
b) de composés polymères ayant au moins deux atomes d'hydrogène réactifs aux isocyanates comprenant au moins un polyétherol (b1) obtenu par alcoxylation d'une molécule initiatrice difonctionnelle et au moins un polyétherol (b2) obtenu par alcoxylation d'une molécule initiatrice tri-
fonctionnelle,
c) de 1 à 12 % en poids, par rapport au poids total des composants a) à c), d'un ou plusieurs agents d'extension de chaîne,
d) de catalyseur et
e) éventuellement de charges et/ou d'additifs de polyuréthane
pour obtenir un mélange réactionnel et laisser le mélange réactionnel durcir.

2. Joint d'étanchéité selon la revendication 1, **caractérisé en ce que** le polyétherol (b1) et le polyétherpolyol (b2) comprennent chacun de l'oxyde d'éthylène et de l'oxyde de propylène comme blocs de construction.

3. Joint d'étanchéité selon la revendication 1 ou 2, **caractérisé en ce que** le rapport en poids de l'oxyde d'éthylène et de l'oxyde de propylène dans le polyétherol (b1) et le polyétherol (b2) est respectivement de 50 : 50 à 5 : 95.

4. Joint d'étanchéité selon l'une quelconque des revendications 1 à 3, **caractérisé en ce que** l'indice hydroxyle du polyétherpolyol (b1) et du polyétherpolyol (b2) est de 20 à 40 mg KOH/g chacun.

5. Joint d'étanchéité selon l'une quelconque des revendications 1 à 4, **caractérisé en ce que** la teneur en polyol (b1) est de 35 à 60 % en poids et celle en polyol (b2) est de 35 à 60 % en poids, chacune étant basée sur le poids total des composés polymères ayant au moins deux atomes d'hydrogène réactifs aux isocyanates (b).

6. Joint d'étanchéité selon l'une quelconque des revendications 1 à 5, **caractérisé en ce que** l'agent d'extension de chaîne (c) est sélectionné dans le groupe constitué du propylène glycol, du dipropylène glycol, du tripropylène glycol, du butanediol et des mélanges de deux ou plusieurs d'entre eux.

7. Joint d'étanchéité selon l'une quelconque des revendications 1 à 6, **caractérisé en ce que** l'isocyanate (a) comprend du MDI ou du MDI modifié.

8. Joint d'étanchéité selon la revendication 7, **caractérisé en ce que** l'isocyanate (a) est un prépolymère de MDI ayant une teneur en NCO de 6 à 30 % en poids, par rapport au poids du prépolymère,

9. Joint d'étanchéité selon la revendication 8, **caractérisé en ce que** le prépolymère de MDI est pouvant être obtenu par réaction du MDI (a-1) avec du polypropylène glycol oligomère pour donner le prépolymère.

10. Joint d'étanchéité selon l'une quelconque des revendications 1 à 9, **caractérisé en ce que** les composés (a) à (e) sont mis en réaction à un indice d'isocyanate de 85 à 130.

11. Joint d'étanchéité selon l'une quelconque des revendications 1 à 10, **caractérisé en ce que** le joint d'étanchéité comprend moins de 5 % en volume de bulles de gaz emprisonnées.

12. Joint d'étanchéité selon l'une quelconque des revendications 1 à 11, **caractérisé en ce que** le joint d'étanchéité a une dureté de 80 à 95 shore A.

13. Joint d'étanchéité selon l'une quelconque des revendications 1 à 12, **caractérisé en ce que** la structure de pieu est un pieu pour un monopieu, un trépied ou un tétrapode.

14. Procédé de montage d'une pièce de transition d'une éolienne sur un monopieu, comprenant les étapes suivantes :
le montage du joint d'étanchéité selon l'une quelconque des revendications 1 à 13 dans la partie inférieure de la pièce de transition et
l'assemblage de la pièce de transition sur le monopieu, de sorte que le joint d'étanchéité est pris en sandwich entre la pièce de transition et le monopieu.

15. Procédé selon la revendication 14, **caractérisé en ce que** la pièce de transition d'une éolienne est montée sur un monopieu à l'emplacement où le monopieu a été fixé dans le sol, tel qu'à un emplacement offshore.
